# EUROPEAN PATENT APPLICATION

(11) **EP 3 531 199 A1**
(43) Date of publication of application: **28.08.2019**
(21) Application number: 18158305.5
(22) Date of filing: 23.02.2018
(51) Int. Cl.: G02F 1/1335

(54) **DISPLAY DEVICE AND METHOD OF CONTROL**

(71) Applicant: Vestel Elektronik Sanayi ve Ticaret A.S., 45030 Manisa (TR)
(72) Inventor: SARIARSLAN, Muhammet Kürsat, 45030 Manisa (TR)
(74) Representative: Flint, Adam

(57) **Abstract**

A display device (30) for displaying images to be viewed by a viewer has a backlight (32) and a display screen (34) having a plurality of display elements (36) which are controllable so as to generate an image. The display device (30) has a first light reflector arrangement (38) and a second light reflector arrangement (40) arranged between the backlight (32) and the display screen (34). The second light reflector arrangement (40) is controllable to selectively transmit light or reflect light that is incident on the second light reflector arrangement (40). Light emitted by the backlight (32) passes through the first light reflector arrangement (38) and towards the second light reflector arrangement (40) and controllably selectively (i) passes directly through the second light reflector arrangement (40) towards the display screen or (ii) is reflected by the second light reflector arrangement (40) towards the first light reflector arrangement (38) and is reflected by the first light reflector arrangement (38) towards the second light reflector arrangement (40).

## Description

### Technical Field

The present disclosure relates a display device and a method of controlling a display device.

### Background

Display devices are used in many different types of consumer apparatus. In a backlit display device, light from one or more light sources in a backlight unit is directed towards controllable display elements, which are controlled selectively to pass light or to block light in order to generate an image.

In known backlit display devices, the backlight is often not used efficiently, resulting in a high power consumption. In addition, a common problem with backlit display devices is leakage or "bleeding" of light. This results in poor image quality. It also means that often the power level for the backlight is set high to compensate for loss of light through some display elements, which can make the leakage of light worse and reduce contrast in the displayed image, and in any event increases the power consumption.

### Summary

According to a first aspect disclosed herein, there is provided a display device for displaying images to be viewed by a viewer, the display device comprising:
a backlight comprising one or more light sources for generating light to be viewed by a viewer;
a display screen comprising a plurality of display elements which are controllable to selectively pass light or block light emitted by the backlight so as to generate an image on the display screen for viewing by a viewer;
a first light reflector arrangement and a second light reflector arrangement arranged between the backlight and the display screen; and
the second light reflector arrangement being controllable to selectively transmit light or reflect light that is incident on the second light reflector arrangement;
the first and second light reflector arrangements being arranged such that light emitted by the backlight towards the display screen passes through the first light reflector arrangement and towards the second light reflector arrangement and controllably selectively (i) passes directly through the second light reflector arrangement towards the display screen or (ii) is reflected by the second light reflector arrangement towards the first light reflector arrangement and is reflected by the first light reflector arrangement towards the second light reflector arrangement.

At (ii), when the light is reflected by the first light reflector arrangement towards the second light reflector arrangement, the light may then either pass through the second light reflector arrangement towards the display screen or is reflected again by the second light reflector arrangement towards the first light reflector arrangement which then again reflects the light towards the second light reflector arrangement. The second light reflector arrangement may then pass that light towards the display screen or may reflect it back to the first light reflector arrangement again as required (and so on).

In an example, the second light reflector arrangement is electrically controllable to selectively transmit light or reflect light that is incident on the second light reflector arrangement.

In an example, the first light reflector arrangement is transparent to light incident on a surface of the first light reflector arrangement that faces the backlight such that light emitted by the backlight passes through the first light reflector arrangement, and the first light reflector arrangement is reflective to light incident on a surface of the first light reflector arrangement that faces the second light reflector arrangement and is arranged such that light reflected by the second light reflector arrangement towards the first light reflector arrangement is reflected by the first light reflector arrangement towards the second light reflector arrangement.

In an example, a surface of the first light reflector arrangement that faces the second light reflector arrangement is formed of plural angled reflective surfaces which are angled such that light reflected from a first part of the second light reflector arrangement and incident on an angled reflective surface of the first light reflector arrangement is reflected towards a different part of the second light reflector arrangement.

In an example, the angled reflective surfaces of the first light reflector arrangement are angled such that light incident on an angled reflective surface of the first light reflector arrangement is reflected towards a different part of the second light reflector arrangement that is inwards of the first part of the second light reflector arrangement.

That is, the light reflected back towards the second light reflector arrangement is generally directed inwardly of the display screen, i.e. away from the edges of the display screen. This particularly helps to reduce light leakage around the edges of the display screen.

In an example, a surface of the second light reflector arrangement that faces the first light reflector arrangement is formed of plural angled reflective surfaces which are angled such that light passing through or reflected by a first part of the first light reflector arrangement and reflected by an angled reflective surface of the second light reflector arrangement is reflected towards a different part of the first light reflector arrangement.

In an example, the angled reflective surfaces of the second light reflector arrangement are angled such that light incident on an angled reflective surface of the second light reflector arrangement is reflected towards a different part of the first light reflector arrangement that is inwards of the first part of the first light reflector arrangement.

That is, the light reflected back towards the first light reflector arrangement is generally directed inwardly of the display screen, i.e. away from the edges of the display screen. This particularly helps to reduce light leakage around the edges of the display screen.

In an example, the second light reflector arrangement is formed of plural independently controllable portions which are independently controllable to selectively transmit light or reflect light that is incident on that portion of the second light reflector arrangement.

In an example, each independently controllable portion corresponds to a respective display element or row of display elements of the display screen such that light that is selectively passed by a controllable portion of the second light reflector arrangement passes through the corresponding display element or row of display elements.

In an example, the backlight is a direct-lit backlight.

According to a second aspect disclosed herein, there is provided a method of controlling a display device to display images to be viewed by a viewer, the display device comprising a backlight comprising one or more light sources for generating light to be viewed by a viewer, a display screen comprising a plurality of display elements which are controllable to selectively pass light or block light emitted by the backlight so as to generate an image on the display screen for viewing by a viewer, and a first light reflector arrangement and a second light reflector arrangement arranged between the backlight and the display screen, the method comprising:
controlling the second light reflector arrangement to selectively transmit light or reflect light that is incident on the second light reflector arrangement, such that light emitted by the backlight towards the display screen passes through the first light reflector arrangement and towards the second light reflector arrangement and controllably selectively (i) passes directly through the second light reflector arrangement towards the display screen or (ii) is reflected by the second light reflector arrangement towards the first light reflector arrangement and is reflected by the first light reflector arrangement towards the second light reflector arrangement.

At (ii), when the light is reflected by the first light reflector arrangement towards the second light reflector arrangement, the light may then either pass through the second light reflector arrangement towards the display screen or is reflected again by the second light reflector arrangement towards the first light reflector arrangement which then again reflects the light towards the second light reflector arrangement. The second light reflector arrangement may then pass that light towards the display screen or may reflect it back to the first light reflector arrangement again (and so on).

In an example, the method comprises electrically controlling the second light reflector arrangement to selectively transmit light or reflect light that is incident on the second light reflector arrangement.

In an example, a surface of the first light reflector arrangement that faces the second light reflector arrangement is formed of plural angled reflective surfaces which are angled such that light reflected from a first part of the second light reflector arrangement and incident on an angled reflective surface of the first light reflector arrangement is reflected towards a different part of the second light reflector arrangement.

In an example, a surface of the second light reflector arrangement that faces the first light reflector arrangement is formed of plural angled reflective surfaces which are angled such that light passing through or reflected by a first part of the first light reflector arrangement and reflected by an angled reflective surface of the second light reflector arrangement is reflected towards a different part of the first light reflector arrangement.

In an example, the second light reflector arrangement is formed of plural independently controllable portions, the method comprising independently controlling the controllable portions to selectively transmit light or reflect light that is incident on that portion of the second light reflector arrangement.

In another aspect, there is provided a display device for displaying images to be viewed by a viewer, the display device comprising:
a backlight comprising one or more light sources for generating light to be viewed by a viewer;
a display screen comprising a plurality of display elements which are controllable to selectively pass light or block light emitted by the backlight so as to generate an image on the display screen for viewing by a viewer;
a first light reflector arrangement and a second light reflector arrangement arranged between the backlight and the display screen; and
the second light reflector arrangement being controllable to selectively transmit light or reflect light that is incident on the second light reflector arrangement;
a surface of the first light reflector arrangement that faces the second light reflector arrangement being formed of plural angled reflective surfaces which are angled such that light reflected from a first part of the second light reflector arrangement and incident on an angled reflective surface of the first light reflector arrangement is reflected towards a different part of the second light reflector arrangement; and
a surface of the second light reflector arrangement that faces the first light reflector arrangement being formed of plural angled reflective surfaces which are angled such that light passing through or reflected by a first part of the first light reflector arrangement and reflected by an angled reflective surface of the second light reflector arrangement is reflected towards a different part of the first light reflector arrangement.

### Brief Description of the Drawings

To assist understanding of the present disclosure and to show how embodiments may be put into effect, reference is made by way of example to the accompanying drawings in which:
Figure 1 shows schematically a plan view from above of a known display device having a direct-lit backlight;
Figure 2 shows schematically a plan view from above of a known display device having an edge -lit backlight;
Figure 3 shows schematically a side view of a first example of a display device according to the present disclosure; and
Figure 4 shows schematically a side view of a second example of a display device according to the present disclosure.

### Detailed Description

Display devices are used in many different types of consumer apparatus including for example television screens or monitors, computer displays or monitors, and displays for other computing devices, including smartphones, tablet computers, laptop computers, etc. Display devices are also used in many public environments in so-called "signage", for example, for displaying advertisements or for information or entertainment that is of interest to a larger audience.

Conventionally, display devices employ one or more light sources for providing light to generate an image. Each light source may correspond to an individual pixel of the image. In backlit display devices, the light source is part of a backlight unit and is used to illuminate a corresponding cell or display element, of for example a liquid crystal layer, which can be controlled to selectively pass or block the light from the light source.

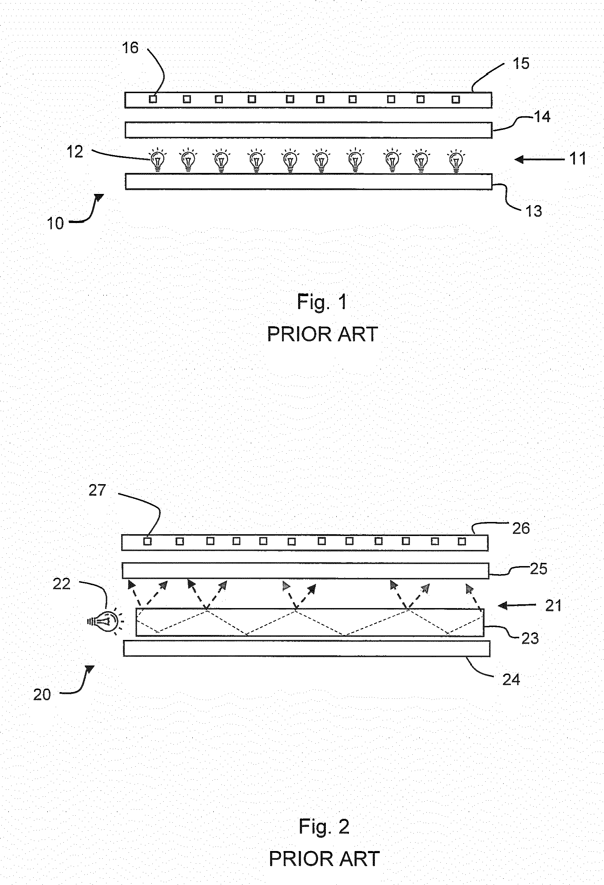

Figure 1 shows schematically a plan view from above (or equivalently a side view) of a display device 10 having a direct-lit backlight 11. As is known, the direct-lit backlight 11 has plural light sources 12 for emitting light. The light sources 12 may be for example LEDs (light emitting diodes). The light sources 12 are arranged typically in a regular array on a reflector panel 13. The light sources 12 emit light which is directed through a diffuser 14 to a display panel 15. The diffuser 14 helps to reduce glare that can otherwise occur. The display panel 15 is formed of or includes a number of display elements 16 (which are also often referred to as "pixels" as they typically correspond to pixels in the image that is displayed). The display elements 16 are controllable so as to selectively transmit or prevent light from the light sources 12 passing through the display panel 15. The display elements 16 may be for example LCDs (liquid crystal display devices). In a display device 10 having a direct-lit backlight 11, generally there is a light source 12 for each display element 16. Moreover, the light sources 12 may emit white light (which may for example be produced by a blue LED emitting blue light which also passes through a phosphor or other material which then typically outputs green and red light (i.e. yellow light). In such a case, the display elements 16 may be formed of three sub-cells or subpixels, which selectively transmit red, green or blue light respectively and thus act as colour filters. The individual sub-cells are controlled according to the colour of the corresponding pixel of the image that is to be displayed.

Referring now to Figure 2, there is shown a plan view from above (or equivalently a side view) of another example of a display device 20. This example has an edge-lit backlight 21. That is, there is at least one light source 22 which is arranged at or towards an edge of the display device 20. Commonly, there are light sources 22 arranged around each of the four edges of the display device 20. The light sources 22 are typically elongate and may be for example cold-cathode fluorescent lamps. In other examples, the light sources 22 located at the edges are plural LEDs or other individual light sources arranged along the edges of the display device 20. The light sources 22 emit light into a light guide 23 which is mounted in front of a reflector 24. The light guide 23 directs the light through a diffuser 25 into a display panel 26. Similarly to the example of Figure 1, the display panel 26 may have plural individually controllable display elements 27. The display elements 27 may be for example LCDs. Again, the light sources 22 may emit white light (which may for example be produced by a blue LED emitting blue light which also passes through a phosphor or other material which then typically outputs green and red light (i.e. yellow light). In such a case, the display elements 27 may be formed of three sub-cells or subpixels, which selectively transmit red, green or blue light respectively and thus act as colour filters. The individual sub-cells are controlled according to the colour of the corresponding pixel of the image that is to be displayed.

In known backlit display devices, the backlight is often not used efficiently, resulting in a high power consumption. In addition, a common problem with backlit display devices is leakage or "bleeding" of light, either directly from the one or more light sources or from light leaking around the display elements or pixels of the display screen. This results in poor image quality. It also means that often the power level for the backlight is often set high to compensate for loss of light through some display elements, which can make the leakage of light worse and reduce contrast (i.e. the difference between dark and bright regions) in the displayed image, and in any event increases the power consumption.

In examples described herein, a display device for displaying images to be viewed by a viewer has a backlight comprising one or more light sources for generating light to be viewed by a viewer and a display screen comprising a plurality of display elements which are controllable to selectively pass light or block light emitted by the backlight so as to generate an image on the display screen for viewing by a viewer. The display device further has a first light reflector arrangement and a second light reflector arrangement arranged between the backlight and the display screen, the second light reflector arrangement being controllable to selectively transmit light or reflect light that is incident on the second light reflector arrangement.

The display device can be operated so that if one or more particular display elements do not need to be illuminated, then a corresponding part of the second light reflector arrangement can be controlled so as not to transmit light and instead to reflect light back to the first light reflector arrangement. Light can then be reflected back from the first light reflector arrangement to the second light reflector arrangement. That reflected light that is incident on the second light reflector arrangement can then be transmitted by the second light reflector arrangement so as to illuminate one or more display elements if needed, or can again be reflected by the second light reflector arrangement back to the first light reflector arrangement. Again, light can then be reflected back from the first light reflector arrangement to the second light reflector arrangement and either transmitted or reflected by the second light reflector arrangement as required.

In particular, in an example the first and second light reflector arrangements are arranged such that light emitted by the backlight towards the display screen passes through the first light reflector arrangement and towards the second light reflector arrangement and controllably selectively (i) passes directly through the second light reflector arrangement towards the display screen or (ii) is reflected by the second light reflector arrangement towards the first light reflector arrangement and is reflected by the first light reflector arrangement towards the second light reflector arrangement. In another example, a surface of the first light reflector arrangement that faces the second light reflector arrangement is formed of plural angled reflective surfaces which are angled such that light reflected from a first part of the second light reflector arrangement and incident on an angled reflective surface of the first light reflector arrangement is reflected towards a different part of the second light reflector arrangement; and a surface of the second light reflector arrangement that faces the first light reflector arrangement is formed of plural angled reflective surfaces which are angled such that light passing through or reflected by a first part of the first light reflector arrangement and reflected by an angled reflective surface of the second light reflector arrangement is reflected towards a different part of the first light reflector arrangement.

In some examples, this can help to reduce the overall power consumption as light that is not needed to illuminate a display element can be "re-used" to illuminate one or more other display elements and is not simply "lost" by being absorbed by a closed display element as in prior art arrangements. In some examples, this can also help to reduce leakage of light from the display device. In some examples, this can also help to improve the contrast ratio and avoid "clouding" or "blooming" of images as light is only directed at display elements that need to be illuminated (at any particular time) and light is not directed at display elements that do not need to be illuminated. Also, because the overall intensity of the light emitted by the backlight can be minimised (because light is not "lost" by absorption by closed display elements), this also assists in improving the contrast.

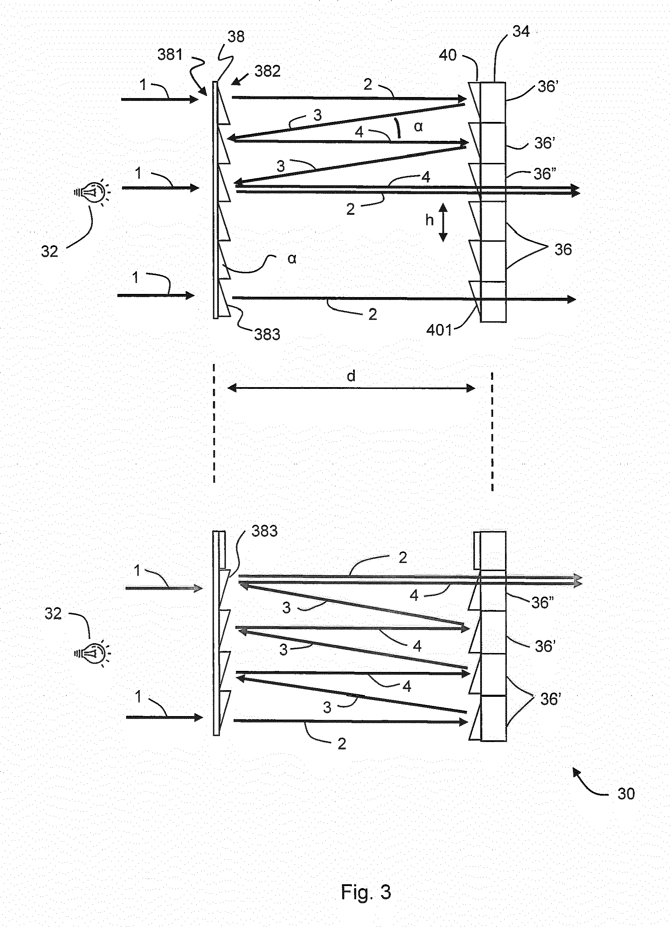

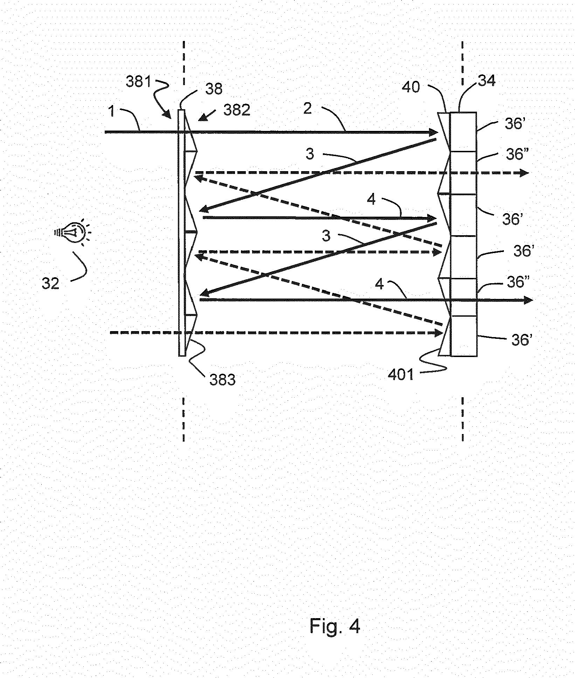

Some specific examples will now be described with reference to Figures 3 and 4.

Referring first to Figure 3, this shows schematically a side view of a first example of a display device 30 according to the present disclosure. Whilst the following description will be given in terms of the view of Figure 3 being a side view, with the upper part of Figure 3 representing the top portion of the display device 30 and the lower part of Figure 3 representing the bottom portion of the display device 30, the description is also applicable to Figure 3 being a plan view from above, with the upper part of Figure 3 representing the right of the display device 30 and the lower part of Figure 3 representing the left of the display device 30 (as viewed by a viewer looking at the front/screen of the display device 30).

Also, Figure 3 does not show other parts of a display device that may be present in practice, including for example a reflector and a diffuser, and a light guide in the case that the backlight is an edge-lit backlight, as discussed more fully above in relation to known display devices, as well as a housing or casing, electronics components such as a mainboard, power board etc., etc.

The display device 30 has a backlight 32, indicated schematically in the figure as a light source. The backlight 32 may be a direct-lit backlight 32 having plural light sources for emitting light. The light sources may be for example LEDs (light emitting diodes). The light sources of a direct-lit backlight 32 are arranged typically in a regular array in a direct-lit backlight. In another example, the backlight 32 may be an edge-lit backlight 32. That is, there is at least one light source which is arranged at or towards an edge of the display device 30. Commonly, there are light sources arranged around each of the four edges of the display device 30 in an edge-lit backlight. The light sources are typically elongate and may be for example cold-cathode fluorescent lamps. In other examples of an edge-lit backlight 32, the light sources located at the edges are plural LEDs or other individual light sources arranged along the edges of the display device 30. In any case, light emitted by the backlight 32 is indicated by first arrows 1.

The display device 30 has a display screen 34 comprising a plurality of display elements 36 (which are also often referred to as "pixels" as they typically correspond to pixels in the image that is displayed). The display elements 36 are controllable so as to selectively transmit light from the backlight 32 or prevent light from the backlight 32 passing through the display screen 34 as required to generate an image on the display screen 34. Each display element 36 has a height h, or, at least, the centres of adjacent display elements 36 are separated by a distance h.

The display elements 36 may be for example LCDs (liquid crystal display devices) or so-called "quantum dots". In a display device 30 having a direct-lit backlight 32, generally there may be a light source for each display element 36 or a light source may illuminate plural display elements 36. For either a direct-lit backlight 32 or an edge-lit backlight 32, the backlight 32 may emit white light (which may for example be produced by a blue LED emitting blue light which also passes through a phosphor or other material which then typically outputs green and red light (i.e. yellow light). In such a case, the display elements 36 may be formed of three sub-cells or subpixels, which selectively transmit red, green or blue light respectively and thus act as colour filters. The individual sub-cells are controlled according to the colour of the corresponding pixel of the image that is to be displayed.

The display device 30 further has a first light reflector arrangement 38 and a second light reflector arrangement 40. The first light reflector arrangement 38 and the second light reflector arrangement 40 are located between the backlight 32 and the display screen 34. The first light reflector arrangement 38 is located towards the backlight 32 and the second light reflector arrangement 40 is located towards the display screen 34. The first light reflector arrangement 38 and the second light reflector arrangement 40 are spaced from each other by a distance d.

Discussing briefly the first light reflector arrangement 38, the surface or face 381 of the first light reflector arrangement 38 that faces the backlight 32 is transparent to light emitted by the backlight 32, such that light 1 emitted by the backlight 32 and incident on the facing surface 381 passes through the first light reflector arrangement 38. Light that has passed through the first light reflector arrangement 38 is indicated by second arrows 2. On the other hand, the surface or face 382 of the first light reflector arrangement 38 that faces the second light reflector arrangement 40 is reflective of the light. This will be discussed further below. Moreover, in this example, the reflective surface 382 of the first light reflector arrangement 38 is formed of plural angled surfaces 383, which again will be discussed further below.

Discussing now briefly the second light reflector arrangement 40, this is controllable to selectively transmit light or reflect light that is incident on the second light reflector arrangement 40 (that light being transmitted or reflected by the first light reflector arrangement 38, as will be discussed further below). The second light reflector arrangement 40 may be electrically controllable to selectively transmit light or reflect light that is incident on the second light reflector arrangement 40. Light being reflected by the second light reflector arrangement 40 is indicated by third arrows 3. The light 3 reflected by the second light reflector arrangement 40 is directed towards the first light reflector arrangement 38. Moreover, in this example, the surface of the second light reflector arrangement 40 that faces the first light reflector arrangement 38 is formed of plural angled surfaces 401, which will be discussed further below.

A processor (not shown) of the display device 30 may control the surface of the second light reflector arrangement 40 that faces the first light reflector arrangement 38 so as to transmit or reflect light as required. The processor may control the second light reflector arrangement 40 in coordination with control of the display elements 36 according to whether an individual display element 36 or group of display elements 36 is to be illuminated at any particular time. In particular, the processor may individually control each of the angled surfaces 401 of the second light reflector arrangement 40 so as to transmit or reflect light as required.

In operation, if a particular display element 36 needs to be illuminated by the backlight 32 so as to generate an illuminated pixel of the display image at that particular location on the display screen 34, then the corresponding part of the second light reflector arrangement 40 is controlled so as to be transmissive. This is illustrated in Figure 3 where a number of particular display elements 36" need to be illuminated. For each of these particular display elements 36", the adjacent part of the second light reflector arrangement 40 is controlled so as to be transmissive. This allows light 1 from the backlight 32 and transmitted 2 by the first light reflector arrangement 38 to pass through the second light reflector arrangement 40 to the display element 36" that needs to be illuminated.

On the other hand, if a particular display element 36 does not need to be illuminated by the backlight 32, then the corresponding part of the second light reflector arrangement 40 is controlled so as to be reflective. This is illustrated in Figure 3 where a number of particular display elements 36' do not need to be illuminated. For each of these particular display elements 36', the adjacent part of the second light reflector arrangement 40 is controlled so as to be reflective. This allows light 1 from the backlight 32 and transmitted 2 by the first light reflector arrangement 38 to be reflected 3 back towards the first light reflector arrangement 38.

This has a number of advantages. First, for display elements 36 that do not need to be illuminated at a particular time, i.e. display elements 36 that are "closed", no light is passed to those display elements 36. This means that there is no light leakage through those closed display elements 36, resulting in improved image quality.

Secondly, light reflected by the second light reflector arrangement 40, indicated by arrows 3, can be reflected by the first light reflector arrangement 38 back towards the second light reflector arrangement 40 again, as indicated by arrows 4. That light can be used to illuminate one or more other display elements 36 that do require illuminating at that particular time.

This can be seen in the upper part of Figure 3. Light 1 from the backlight 32 at the top of the figure passes 2 through the first light reflector arrangement 38 towards the second light reflector arrangement 40. The corresponding display element 36' (at the top in the figure) is closed, so the adjacent part of the second light reflector arrangement 40 is controlled to reflect the light back 3 towards the first light reflector arrangement 38. The light incident on the surface 382 of the first light reflector arrangement 38 is reflected back towards the second light reflector arrangement 40, as indicated by the arrow 4. In this case, the corresponding display element 36' (second from the top in the figure) is closed, so, again, the adjacent part of the second light reflector arrangement 40 is controlled to reflect the light back 3 towards the first light reflector arrangement 38 again. From there, the light incident on the surface 382 of the first light reflector arrangement 38 is again reflected 4 back towards the second light reflector arrangement 40. In this case, the corresponding display element 36" (third from the top in the figure) is open, so the adjacent part of the second light reflector arrangement 40 is controlled so as to be transmissive. This time, this allows the light that has been reflected 4 by the first light reflector arrangement 38 to pass through the second light reflector arrangement 40 to the display element 36" that needs to be illuminated. Notably, in this example this light is in addition to light 1 from the backlight 32 that has been transmitted 2 by the first light reflector arrangement 38 to pass through the second light reflector arrangement 40 to the display element 36" that needs to be illuminated (as illustrated by the two light rays passing through the third display element 36" from the top in Figure 3).

An advantage of this is that the light from the backlight 32 is used more efficiently, as none is lost by being absorbed by a closed display element as in prior art arrangements. This means that the intensity of the backlight 32 can be lower than in the prior art to achieve the same brightness at a particular display element/pixel 36, which results in lower power consumption and generation of less heat during operation. Alternatively or additionally, the brightness at a particular display element/pixel 36 can be greater using the same intensity of the backlight 32 as in the prior art or greater using a somewhat reduced intensity of the backlight 32 than in the prior art.

To assist in directing light that is reflected by the first light reflector arrangement 38 and the second light reflector arrangement 40, in an example the first light reflector arrangement 38 and the second light reflector arrangement 40 are provided with plural angled surfaces 383, 401 on their facing surfaces. Various options for angling and arranging these angled surfaces 383, 401 are possible.

First, as in the example illustrated schematically in Figure 3, the respective angled surfaces 383, 401 may be arranged such that light reflected by the second light reflector arrangement 40 adjacent a particular (closed) display element 36 or row of display elements 36 is directed to the first light reflector arrangement 38 which then reflects the light back to an adjacent display element 36 or row of display elements 36. By simple trigonometry, it can be seen that the angle α of the angled surfaces 383, 401 to the plane of the respective first and second light reflector arrangements 38, 40 in such a case is given by tan α = h/d, where h is the height of or separation between display elements and d is the distance between the first and second light reflector arrangements 38, 40.

The angling of the angled surfaces 383, 401 may be the same or may differ across the first and second light reflector arrangements 38, 40. For example, instead of reflecting light to an immediately adjacent display element 36 (or row of display elements 36), it may be useful to reflect light to the next but one display element 36 (or row of display elements 36), or the third display element 36 (or row of display elements 36), etc. As another example, it may be useful for light not to be reflected to an immediately adjacent display element 36 at some locations of the display screen 34 (for example, at edges or towards the centre), and instead for the light to be reflected towards the next but one display element 36 (or row of display elements 36), or the third display element 36 (or row of display elements 36), etc. at some portions of the display screen 34. The angling of the angled surfaces 383, 401 may be set to achieve reflection directions as desired.

As another example, the reflective surfaces of one or both of the first and second light reflector arrangements 38, 40, in particular one or both of the angled surfaces 383, 401 in this example, may be arranged so that reflected light is generally directed inwardly of the display screen 34, i.e. away from the edges of the display screen 34. This is shown in Figure 3 where one or both of the angled surfaces 383, 401 in the upper part of the figure (corresponding to the top or a side edge of the display screen 34) are arranged to reflect light generally downwards in the figure, and one or both of the angled surfaces 383, 401 in the lower part of the figure (corresponding to the bottom or the other side edge of the display screen 34) are arranged to reflect light generally upwards in the figure. This particularly helps to reduce light leakage around the edges of the display screen 34.

As another example, there may be portions between the backlight 32 and the display screen 34 that do not selectively transmit and reflect light, and instead light just passes from the backlight 32 to the corresponding display elements 36 as conventional in the prior art. This is illustrated in Figure 3 by plane, non-angled portions 384, 402 on the first and second light reflector arrangements 38, 40 respectively, though this may equivalently be achieved simply by having no first and second light reflector arrangements 38, 40 in those regions. In this example, the plane/non-reflective portions are provided towards the central portion of the display screen 34. This may be particularly useful in a display device having an edge-lit backlight as such display devices can be particularly prone to light leakage at the edges.

Another example is illustrated schematically in Figure 4, in which like components are given the same reference numerals as in the example of Figure 3. In the example of Figure 4, the angle α of the angled surfaces 383, 401 is such that light is reflected towards the next but one display element 36, as described in an example above (i.e. here, the angle α is approximately twice the angle α of the example shown in Figure 3). Moreover, in the example of Figure 4, the angling of the respective angled surfaces 383, 401 alternates between adjacent respective angled surfaces 383, 401 such that one angled surface 383, 401 faces "downwards" and the adjacent angled surface 383, 401 faces "upwards". The effect of this is that light 1 entering from the backlight 32 at the "top" of the display screen 34 (i.e. the top in the figure) is reflected downwards, into the interior of the display screen 34 and light 1 entering from the backlight 32 at the "bottom" of the display screen 34 (i.e. the bottom in the figure) is reflected upwards.

The first and second light reflector arrangements 38, 40 may be arranged so that there are separate reflective parts (e.g. the angled surfaces 383, 401) for each display element 36 of the display screen 34. This provides the greatest control of the selective transmission and reflection of light as it allows the transmission and reflection of light to be controlled on a per pixel basis. In other examples, the first and second light reflector arrangements 38, 40 may be arranged so that the reflective parts (e.g. the angled surfaces 383, 401) each respectively cover plural display elements 36 of the display screen 34. For example, the first and second light reflector arrangements 38, 40 may be arranged so that the reflective parts each respectively cover a row or a column of display elements 36. In another example, the first and second light reflector arrangements 38, 40 may be arranged so that the reflective parts each respectively cover a two-dimensional array of display elements 36. By way of example only, the first and second light reflector arrangements 38, 40 may be arranged into say 1000 distinct groups, each covering plural display elements 36. Combinations of these may be used. For example, some reflective parts (e.g. the angled surfaces 383, 401) may cover individual display elements 36, other reflective parts may cover rows or columns or display elements 36, and other reflective parts may cover two-dimensional arrays of display elements 36. Other variations are possible.

In summary, in examples the reflective parts of the first and second light reflector arrangements 38, 40 are arranged to be adaptively controlled to prevent light passing to closed display elements (pixels) 36, so preventing light leakage at those closed display elements 36, whilst reflecting that light to open display elements (pixels) 36, resulting in a brighter image or allowing a lower light intensity to be emitted by the backlight 32 at least for those open display elements 36, and therefore improving contrast in the image and/or reducing power consumption.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A display device for displaying images to be viewed by a viewer, the display device comprising:
a backlight comprising one or more light sources for generating light to be viewed by a viewer;
a display screen comprising a plurality of display elements which are controllable to selectively pass light or block light emitted by the backlight so as to generate an image on the display screen for viewing by a viewer;
a first light reflector arrangement and a second light reflector arrangement arranged between the backlight and the display screen; and
the second light reflector arrangement being controllable to selectively transmit light or reflect light that is incident on the second light reflector arrangement;
the first and second light reflector arrangements being arranged such that light emitted by the backlight towards the display screen passes through the first light reflector arrangement and towards the second light reflector arrangement and controllably selectively (i) passes directly through the second light reflector arrangement towards the display screen or (ii) is reflected by the second light reflector arrangement towards the first light reflector arrangement and is reflected by the first light reflector arrangement towards the second light reflector arrangement.

2. A display device according to claim 1, wherein the second light reflector arrangement is electrically controllable to selectively transmit light or reflect light that is incident on the second light reflector arrangement.

3. A display device according to claim 1 or claim 2, wherein the first light reflector arrangement is transparent to light incident on a surface of the first light reflector arrangement that faces the backlight such that light emitted by the backlight passes through the first light reflector arrangement, and the first light reflector arrangement is reflective to light incident on a surface of the first light reflector arrangement that faces the second light reflector arrangement and is arranged such that light reflected by the second light reflector arrangement towards the first light reflector arrangement is reflected by the first light reflector arrangement towards the second light reflector arrangement.

4. A display device according to any of claims 1 to 3, wherein a surface of the first light reflector arrangement that faces the second light reflector arrangement is formed of plural angled reflective surfaces which are angled such that light reflected from a first part of the second light reflector arrangement and incident on an angled reflective surface of the first light reflector arrangement is reflected towards a different part of the second light reflector arrangement.

5. A display device according to claim 4, wherein the angled reflective surfaces of the first light reflector arrangement are angled such that light incident on an angled reflective surface of the first light reflector arrangement is reflected towards a different part of the second light reflector arrangement that is inwards of the first part of the second light reflector arrangement.

6. A display device according to any of claims 1 to 5, wherein a surface of the second light reflector arrangement that faces the first light reflector arrangement is formed of plural angled reflective surfaces which are angled such that light passing through or reflected by a first part of the first light reflector arrangement and reflected by an angled reflective surface of the second light reflector arrangement is reflected towards a different part of the first light reflector arrangement.

7. A display device according to claim 6, wherein the angled reflective surfaces of the second light reflector arrangement are angled such that light incident on an angled reflective surface of the second light reflector arrangement is reflected towards a different part of the first light reflector arrangement that is inwards of the first part of the first light reflector arrangement.

8. A display device according to any of claims 1 to 7, wherein the second light reflector arrangement is formed of plural independently controllable portions which are independently controllable to selectively transmit light or reflect light that is incident on that portion of the second light reflector arrangement.

9. A display device according to claim 8, wherein each independently controllable portion corresponds to a respective display element or row of display elements of the display screen such that light that is selectively passed by a controllable portion of the second light reflector arrangement passes through the corresponding display element or row of display elements.

10. A display device according to any of claims 1 to 9, wherein the backlight is a direct-lit backlight.

11. A method of controlling a display device to display images to be viewed by a viewer, the display device comprising a backlight comprising one or more light sources for generating light to be viewed by a viewer, a display screen comprising a plurality of display elements which are controllable to selectively pass light or block light emitted by the backlight so as to generate an image on the display screen for viewing by a viewer, and a first light reflector arrangement and a second light reflector arrangement arranged between the backlight and the display screen, the method comprising:
controlling the second light reflector arrangement to selectively transmit light or reflect light that is incident on the second light reflector arrangement, such that light emitted by the backlight towards the display screen passes through the first light reflector arrangement and towards the second light reflector arrangement and controllably selectively (i) passes directly through the second light reflector arrangement towards the display screen or (ii) is reflected by the second light reflector arrangement towards the first light reflector arrangement and is reflected by the first light reflector arrangement towards the second light reflector arrangement.

12. A method according to claim 11, comprising electrically controlling the second light reflector arrangement to selectively transmit light or reflect light that is incident on the second light reflector arrangement.

13. A method according to claim 11 or claim 12, wherein a surface of the first light reflector arrangement that faces the second light reflector arrangement is formed of plural angled reflective surfaces which are angled such that light reflected from a first part of the second light reflector arrangement and incident on an angled reflective surface of the first light reflector arrangement is reflected towards a different part of the second light reflector arrangement.

14. A method according to any of claims 11 to 13, wherein a surface of the second light reflector arrangement that faces the first light reflector arrangement is formed of plural angled reflective surfaces which are angled such that light passing through or reflected by a first part of the first light reflector arrangement and reflected by an angled reflective surface of the second light reflector arrangement is reflected towards a different part of the first light reflector arrangement.

15. A method according to any of claims 11 to 14, wherein the second light reflector arrangement is formed of plural independently controllable portions, the method comprising independently controlling the controllable portions to selectively transmit light or reflect light that is incident on that portion of the second light reflector arrangement.
